# EUROPÄISCHE PATENTANMELDUNG

(11) **EP 0 792 000 A2**
(43) Veröffentlichungstag der Anmeldung: **27.08.1997**
(21) Anmeldenummer: 97890025.6
(22) Anmeldetag: 13.02.1997
(51) Int. Cl.: H02J 7/00

(54) **Vorrichtung zum Aufladen von Akkumulatoren**

(30) Priorität: 21.02.1996 AT 319/96
(71) Anmelder: Industrieelektronik Pölz, 4551 Ried (AT)
(72) Erfinder: Pölz, Herbert, 4501 Neuhofen (AT)
(74) Vertreter: Hübscher, Heiner, Dipl.-Ing.

(57) **Zusammenfassung**

Eine Vorrichtung (1) zum Aufladen von Akkumulatoren (A, B) besteht aus einer Akkumulatorenhalterung (2), die mit wenigstens einem Paar über Ladekabeln (4) an ein Ladegerät (3) anschließbaren Ladekontakten (11) für die Akkumulatorpole (P) bestückt ist.

Um einwandfreie Kontaktbedingungen für das Aufladen unabhängig von der Größe und Form der Akkumulatoren zu erreichen, weist die Akkumulatorenhalterung (2) zumindest eine Schiebeführung (6) zur schiebeverstellbaren Aufnahme von Kontaktträgem (7) auf, wobei die Kontaktträger (7) als frei vorkragende, um führungsparallele Drehachsen drehbare Schwenkarme (8) ausgebildet sind, die jeweils einen Stecker (13) zum Anschluß eines Ladekabels (4) und an ihrem freien Ende einen mit dem Stecker (13) leitungsverbundenen Ladekontakt (11) tragen.

## Beschreibung

Die Erfindung bezieht sich auf eine Vorrichtung zum Aufladen von Akkumulatoren, bestehend aus einer Akkumulatorenhalterung, die mit wenigstens einem Paar über Ladekabeln an ein Ladegerät anschließbaren Ladekontakten für die Akkumulatorpole bestückt ist.

Zum Aufladen von Akkumulatoren gibt es geeignete Ladegeräte, deren Ladekabel mittels Ladekontakten an den Akkumulatorpolen anzuschließen sind. Solange es sich hiebei um Kontaktklemmen handelt, die an den Polen von Akkumulatoren angesetzt werden, wie dies beispielsweise bei Bleiakkumulatoren der Fall ist, gibt es hinsichtlich der Leitungsverbindung kaum Schwierigkeiten, doch bei kleineren Akkumulatoren, wie NiCd- und NiMH-Akkumulatoren, bei denen die Ladekontakte an den Polen nicht festgeklemmt, sondern in Form von Kontaktplättchen oder -stiften nur berührend angedrückt oder in eine Polbuchse eingesteckt werden können, ist eine ordnungsgemäße Leitungsverbindung von Akkumulatorpolen zum Ladegerät meist von einer genauen Anpassung der Ladeeinrichtungen an eine bestimmte Akkumulatorart und -bauweise abhängig. Da es aber sehr unterschiedliche Abmessungen und Formen solcher Akkumulatoren gibt, ist deren Aufladen mit einer einheitlichen Ladevorrichtung ein recht heikler Vorgang und wegen der Messungen zur Ladekontrolle im Mikrovoltbereich muß bei unsicheren Leitungsverbindungen häufig eine Unterbrechung des Ladevorganges befürchtet werden.

Der Erfindung liegt daher die Aufgabe zugrunde, diese Mängel zu beseitigen und eine Vorrichtung der eingangs geschilderten Art zu schaffen, die ein einwandreies Aufladen auch unterschiedlicher Akkumulatoren mit ein und demselben geeigneten Ladegerät gewährleistet.

Die Erfindung löst diese Aufgabe dadurch, daß die Akkumulatorenhalterung zumindest eine Schiebeführung zur schiebeverstellbaren Aufnahme von Kontaktträgern aufweist, wobei die Kontaktträger als frei vorkragende, um führungsparallele Drehachsen drehbare Schwenkarme ausgebildet sind, die jeweils einen Stecker od. dgl. zum Anschluß eines Ladekabels und an ihrem freien Ende einen mit dem Stecker leitungsverbundenen Ladekontakt tragen. Auf Grund der verdrehbaren und schiebeverstellbaren Schwenkarme können die Ladekontakte in weiten Bereichen an die unterschiedlichsten Akkumulatorformen und -größen bzw. Polpositionen angepaßt werden, womit sich die Ladekontakte praktisch bei jedem beliebigen Akkumulator ordnungsgemäß an den Akkumulatorpolen ansetzen lassen. Dabei wird der Ladekontakt durch geeignetes Verstellen und Niederdrücken der Schwenkarme mit ausreichender Druckbelastung am Pol angedrückt, so daß einerseits eine klemmende Halterung für den Akkumulator zwischen den Schwenkarmen bzw. zwischen den Schwenkarmen und einer Akkumulatorauflage und anderseits ein einwandfreier Leitungskontakt zwischen den Ladekontakten und den Akkumulatorpolen erreicht wird. Über die Stecker der Schwenkarme können die Ladekabel des Ladegerätes unabhängig vom jeweils aufzuladenden Akkumulator mit den jeweils exakt passenden Anschlußkupplungen angesteckt werden, was die angestrebte einwandfreie Leitungsverbindung zwischen Ladegerät und beliebigem Akkumulator gewährleistet und einen sicheren, unterbrechungsfreien Ladevorgang garantiert. An sich genügt die Anordnung einer gemeinsamen Schiebeführung für ein Paar Kontaktträger, doch ist es oft zweckmäßig für jeden Kontaktträger eine eigene Schiebeführung vorzusehen und selbstverständlich ist es auch möglich, mehrere Führungspaare zum gleichzeitigen Laden mehrerer Akkumulatoren einzusetzen.

Die konstruktive Ausgestaltung der Akkumulatorenhalterung und der Schiebeführungen ist an sich frei wählbar, eine besonders einfache Konstruktion ergibt sich allerdings, wenn die Schiebeführungen aus Rundstäben bestehen, auf denen die Schwenkarme mit einem eine Klemmschraube aufnehmenden Lagerauge sitzen. Die Schwenkarme können daher bei gelockerter Klemmschraube entlang der Rundstäbe verschoben und auch um die Rundstäbe herum im gewünschten Ausmaß verschwenkt werden und ein Anziehen der Klemmschraube erlaubt die Fixierung in jeder gewählten Position. Wird daher der Schwenkarm mit seinem Ladekontakt in der richtigen Schwenklage auf einen Akkumulatorpol abgesenkt und bei ausreichender Druckbelastung festgeschraubt, ergeben sich zwangsweise zusammen mit der Lagefixierung des Schwenkarmes die Einspannwirkung für den Akkumulator und vor allem auch der ausreichende Berührungsdruck für die Leitungsverbindung zwischen Ladekontakt und Akkumulatorpol.

Weist einer der Schwenkarme an der ladekontaktabgewandten Seite einen mit dem Stecker leitungsverbundenen Kontaktteller zum Aufsetzen eines einzelligen Akkumulators auf, ist es auf einfache Weise möglich, auch Monozellen einwandfrei aufzuladen, wozu diese Monozellen zwischen dem Kontaktteller des einen Schwenkarmes und dem Ladekontakt des anderen Schwenkarmes bzw. einer gleichwertigen Kontaktstelle dieses anderen Schwenkarmes festgeklemmt werden, so daß die bei Monozellen an einander gegenüberliegenden Seiten vorgesehenen Pole mit den zugehörigen Ladekontakten verbunden sind.

Die Akkumulatorenhalterung selbst läßt sich ebenfalls auf verschiedenste Weise ausgestalten und mit der oder den Schiebeführungen ausstatten, wobei es zweckmäßig ist, wenn die Akkumulatorenhalterung aus einer Winkelplatte besteht, die in einem oder beiden Winkelschenkeln Lagerstellen zur Rundstabbefestigung aufweist, welche Lagerstellen vorzugsweise als Langlöcher ausgebildet sein können. Eine solche Winkelplatte dient als Standplatte und erlaubt die Anordnung hochstehender oder querliegender Rundstäbe, was weitgehende Freiheiten in der Positionierung der Ladekontakte bietet und je nach Akkumulatoraufbau die Akkumulatoren auf dem unteren Winkelschenkel aufzusetzen oder sie zwischen seitlichem Winkelschenkel und Kontaktträger oder auch zwischen zwei Kontaktträgern einzuklemmen erlaubt. Eine verstellbare Befestigung der Rundstäbe in Langlöchem vergrößert diese Anpassungsmöglichkeit noch.

Nach einer weiteren Ausgestaltung der Erfindung ist ein zusätzlicher Schwenkarm vorgesehen, der statt eines Ladekontaktes einen Temperaturfühler aufnimmt. Durch einen solchen Temperaturfühler, dem auch eine eigene Schiebeführung zugeordnet sein und der durch die Verschieb- und Verschwenkbarkeit des Schwenkarmes ebenfalls bei den unterschiedlichen Akkumulatoren an den jeweils geeigneten Stellen angesetzt werden kann, läßt sich die Temperatur beim Ladevorgang erfassen und an das Ladegerät weitergeben, so daß bei einer zu starken Ladebelastung und steigender Akkumulatortemperatur der Ladestrom zurückgeregelt wird. Um die Ansatzmöglichkeiten des Temperaturfühlers zu erweitern und auch den radialen Ansatzbereich variieren zu können, ist der Temperaturfühler in Längsrichtung des Schwenkarmes verschiebbar angeordnet.

In der Zeichnung ist der Erfindungsgegenstand rein schematisch veranschaulicht, und zwar zeigen
- Fig.1 und 2: eine erfindungsgemäße Vorrichtung in Draufsicht bzw. in Seitenansicht und
- Fig. 3: ein anderes Ausführungsbeispiel der Akkumulatorenhalterung für diese Vorrichtung im Schaubild.

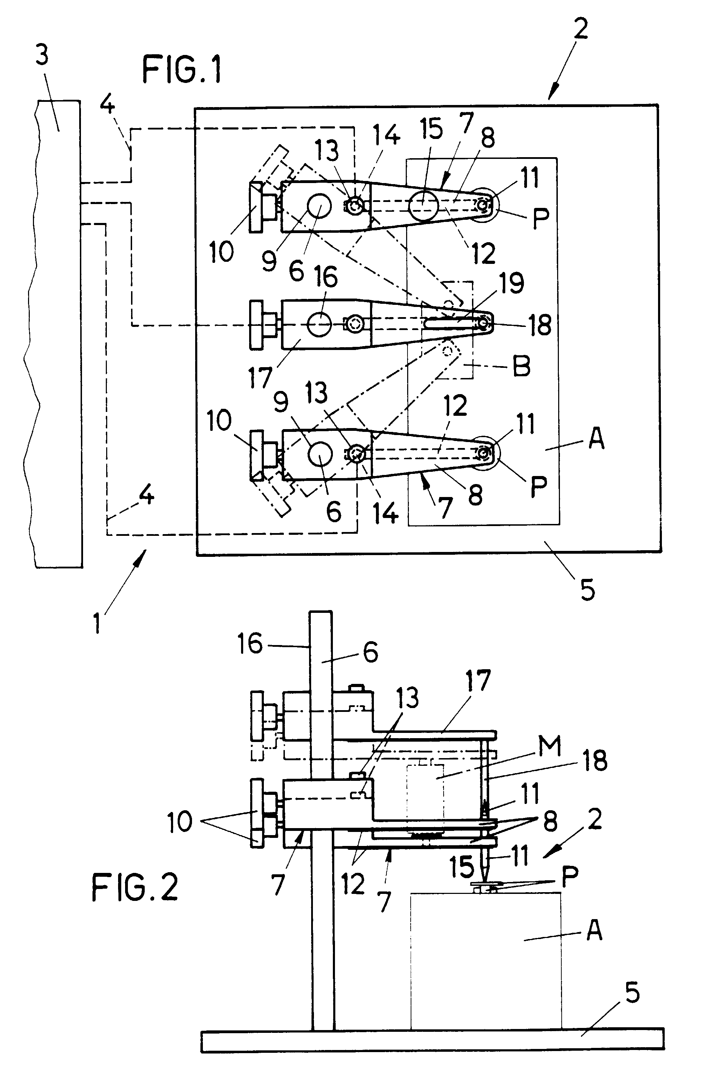

Gemäß dem Ausführungsbeispiel nach Fig. 1 und 2 umfaßt eine Vorrichtung 1 zum Aufladen von Akkumulatoren A eine Akkumulatorenhalterung 2 und ein Ladegerät 3, wobei das Ladegerät 3 mit der Akkumulatorenhalterung 2 über Ladekabeln 4 in Verbindung steht. Die Akkumulatorenhalterung 2 besteht aus einer Standplatte 5 und zwei zueinander parallelen Rundstäben 6 als Schiebeführungen für ein Paar Kontaktträger 7, welche als Schwenkarme 8 ausgebildeten Kontaktträger 8 mit einem Lagerauge 9 auf der Rundstange 6 höhenverschiebbar sitzen und mittels einer Stellschraube 10 in beliebiger Schwenk- und Höhenlage fixierbar sind. Die Schwenkarme 8 sind an ihrem freien Ende mit einem abwärts gerichteten stiftförmigen Ladekontakt 11 ausgerüstet, der über eine Verbindungsleitung 12 mit einer an der Schwenkarmoberseite angeordneten Steckbuchse 13 leitungsverbunden ist. Die Stecker 13 dienen zum Anstecken der passende Anschlußkupplungen 14 aufweisenden Ladekabel 4.

Zum Aufladen eines beliebigen Akkumulators A wird dieser bei entsprechend hochgeschobenen Schwenkarmen 8 in Reichweite der Ladekontakte 11 auf der Standplatte 5 aufgesetzt. Nun werden durch geeignetes Verschwenken und Höhenverstellen der Schwenkarme 8 die Ladekontakte 11 in die den Polen P gegenüber richtigen Positionen gebracht und beim Absenken der Schwenkarme 8 mit Druck an diese Pole P angedrückt. Ein Fixieren der Schwenkarme 8 mit den Klemmschrauben 10 klemmt den Akkumulator A ein und gewährleistet außerdem einen einwandfreien Leitungskontakt zwischen Ladekontakten und Polen. Der Aufladevorgang kann ordnungsgemäß ablaufen.

Soll ein anderer Akkumulator B aufgeladen werden, brauchen lediglich, wie in Fig. 1 strichpunktiert angedeutet, die Schwenkarme 8 so verschwenkt bzw. höhenverstellt zu werden, daß die Ladekontakte 11 wiederum die laderichtige Position für diese Akkumulatorbauart einnehmen, und auch hier kann daher die Leitungsverbindung zum Ladegerät 3 einwandfrei hergestellt werden.

Wie in Fig. 2 strichpunktiert angedeutet, kann auch eine Monozelle M aufgeladen werden, wenn der eine Schwenkarm 8 an der Oberseite einen mit der Buchse 13 leitungsverbundenen Kontaktteller 15 trägt, so daß die Monozelle mit ihren oben und unten liegenden Polen zwischen dem oberen Kontaktteller 15 des einen Schwenkarmes und dem Ladekontakt 11 oder der unten liegenden Verbindungsleitung 12 des anderen Schwenkarmes eingeklemmt wird.

Die Akkumulatorenhalterung 2 kann nun vorzugsweise zwischen den Rundstäben 9 einen weiteren Rundstab 16 aufweisen, auf dem ein zusätzlicher Schwenkarm 17 höhen- und drehverstellbar sitzt, welcher Schwenkarm 17 statt eines Ladekontaktes am freien Ende einen Temperaturfühler 18 aufnimmt, der in Längsrichtung des Schwenkarmes 17 entlang einer Schlitzhalterung 19 verschiebbar angeordnet ist. Dadurch kann der Temperaturfühler 18 auf die aufzuladenden Akkumulatoren A, B aufgesetzt werden, wobei die Fühlerposition an die jeweiligen Gegebenheiten durch Verstellen des Schwenkarmes einerseits und Verschieben des Fühlers anderseits anzupassen ist. Über den Temperaturfühler 18 läßt sich während des Aufladevorgangs die Akkumulatortemperatur erfassen und dem Ladegerät 3 eingeben, so daß eine temperaturabhängige Ladekontrolle möglich ist.

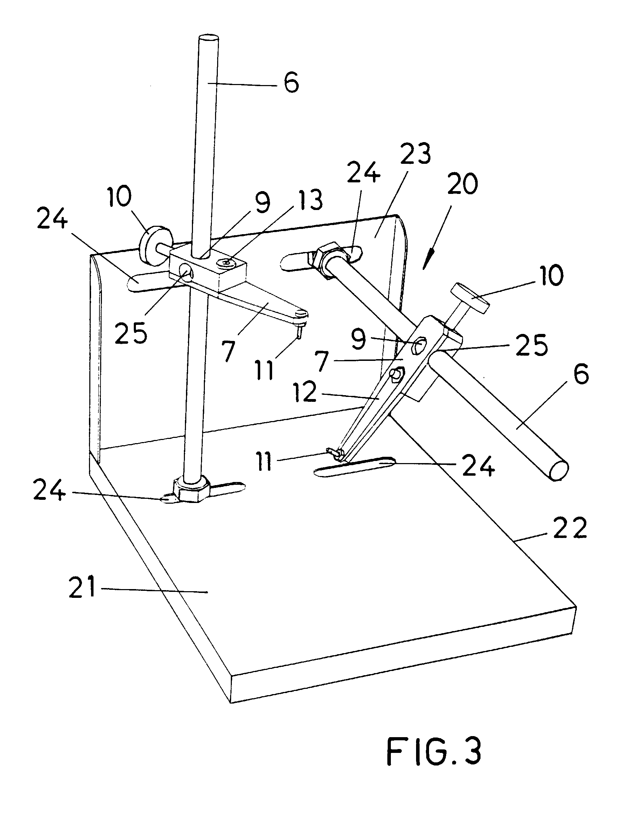

Beim Ausführungsbeispiel nach Fig. 3 besteht die Akkumulatorenhalterung 20 aus einer Winkelplatte 21, die in ihrem unteren Winkelschenkel 22 und in ihrem seitlichen Winkelschenkel 23 als Langlöcher 24 ausgebildete Lagerstellen zum wahlweisen Befestigen der Rundstäbe 6 aufweist. Auf diese Rundstäbe 6, die damit hochragend und/oder querliegend montierbar sind, werden die Kontaktträger 7 mit ihrem Lagerauge 9 oder mit einem zusätzlichen dazu normalen Lagerauge 25 aufgesteckt, wodurch die Anpassungs- und Positionierungsmöglichkeiten der Ladekontakte 11 weiter gesteigert werden können und die Vorrichtung zum Aufladen beliebiger Akkumulatoren geeignet wird.

## Patentansprüche

1. Vorrichtung (1) zum Aufladen von Akkumulatoren (A), bestehend aus einer Akkumulatorenhalterung (2), die mit wenigstens einem Paar über Ladekabeln (4) an ein Ladegerät (3) anschließbaren Ladekontakten (11) für die Akkumulatorpole (P) bestückt ist, dadurch gekennzeichnet, daß die Akkumulatorenhalterung (2, 20) zumindest eine Schiebeführung (6) zur schiebeverstellbaren Aufnahme von Kontaktträgern (7) aufweist, wobei die Kontaktträger (7) als frei vorkragende, um führungsparallele Drehachsen drehbare Schwenkarme (8) ausgebildet sind, die jeweils einen Stecker (13) od. dgl. zum Anschluß eines Ladekabels (4) und an ihrem freien Ende einen mit dem Stecker (13) leitungsverbundenen Ladekontakt (11) tragen.

2. Vorrichtung nach Anspruch 1, dadurch gekennzeichnet, daß die Schiebeführungen aus Rundstäben (6) bestehen, auf denen die Schwenkarme (8) mit einem eine Klemmschraube (10) aufnehmenden Lagerauge (9, 25) sitzen.

3. Vorrichtung nach Anspruch 1 oder 2, dadurch gekennzeichnet, daß einer der Schwenkarme (8) an der ladekontaktabgewandten Seite einen mit dem Stecker (13) leitungsverbundenen Kontaktteller (15) zum Aufsetzen eines einzelligen Akkumulators (M) aufweist.

4. Vorrichtung nach einem der Ansprüche 1 bis 3, dadurch gekennzeichnet, daß die Akkumulatorenhalterung (20) aus einer Winkelplatte (21) besteht, die in einem oder beiden Winkelschenkeln (22, 23) Lagerstellen (24) zur Rundstabbefestigung aufweist.

5. Vorrichtung nach Anspruch 4, dadurch gekennzeichnet, daß die Lagerstellen als Langlöcher (24) ausgebildet sind.

6. Vorrichtung nach einem der Ansprüche 1 bis 5, dadurch gekennzeichnet, daß ein zusätzlicher Schwenkarm (17) vorgesehen ist, der statt eines Ladekontaktes einen Temperaturfühler (18) aufnimmt.

7. Vorrichtung nach Anspruch 6, dadurch gekennzeichnet, daß der Temperaturfühler (18) in Längsrichtung des Schwenkarmes (17) verstellbar angeordnet ist.
